# FASCICULE DE BREVET EUROPEEN

(11) **EP 2 129 208 B1**
(45) Date de publication et mention de la délivrance du brevet: **28.12.2011**
(21) Numéro de dépôt: 08710112.7
(22) Date de dépôt: 21.02.2008
(51) Int. Cl.: A01B 43/00

(54) **MACHINE AGRICOLE POUR LA SEPARATION D'ELEMENTS DU SOL**
LANDWIRTSCHAFTLICHES GERÄT ZUM TRENNEN VON BODENELEMENTEN
FARMING IMPLEMENT FOR SEPARATING GROUND ELEMENTS

(30) Priorité: 28.02.2007 EP 07103241
(43) Date de publication de la demande: 09.12.2009
(73) Titulaire: Gerber, Roger, 1867 Ollon (CH)
(72) Inventeur: Gerber, Roger, 1867 Ollon (CH)
(74) Mandataire: Grosfillier, Philippe
(86) Numéro de dépôt international: PCT/IB2008/050623
(87) Numéro de publication internationale: WO 2008/104903

(56) Documents cités:
- EP-A- 0 039 792
- FR-A- 382 381

## Description

### Domaine de l'invention

La présente invention se rapporte aux machines agricoles, appelées communément séparateurs, tamiseuses ou épierreuses-émotteuses, qui sont utilisées pour la séparation d'éléments du sol, tels que pierres, mottes ou racines.

### Etat de la technique

Les documents US 4,548,275 et GB 2 238 219 décrivent des séparateurs qui comprennent au moins une bande transporteuse à claire-voie au travers de laquelle des éléments du sol, inférieurs à une certaine taille, peuvent passer et retourner sur le sol, les éléments de taille supérieure étant acheminés jusqu'à l'extrémité de la bande transporteuse pour être déversés dans des sillons ou éventuellement pour être récupérés dans un récipient.

Le document US 5,671,839 décrit une bande transporteuse à claire-voie qui peut être utilisée avec un séparateur tel que décrit précédemment.

La séparation d'éléments du sol peut être également réalisée au moyen d'un ensemble de cylindres séparés les uns des autres d'une distance qui correspond sensiblement à la taille maximale des éléments qui retournent sur le sol. A titre illustratif de ce deuxième type de séparation, on se référera également au document GB 2 238 219.

Les cylindres de séparation peuvent également avoir une section dont la forme ressemble sensiblement à une étoile. Les machines CombiStar CS 1500/CS 1700 de la société GRIMME peuvent être munies de ce type de cylindre.

Les machines de l'état de la technique présentent cependant plusieurs inconvénients.

L'usure des moyens de séparation (bande transporteuse, cylindres, etc...) est assez rapide à cause de la charge élevée qui est imposée par la masse d'éléments à séparer.

Cette même charge ne permet pas en outre de travailler à des vitesses de transport élevées, ce qui entraîne un processus de séparation relativement long.

Par ailleurs, si une séparation efficace est recherchée, il importe d'avoir des moyens de séparation qui soient répartis une grande distance, d'où la nécessité d'avoir recours à un séparateur relativement long, donc plus difficilement maîtrisable.

Les séparateurs utilisant une bande transporteuse du type de celle décrite dans le document US 5,671,839 présentent en outre l'inconvénient majeur de ne pas produire une granulométrie satisfaisante.

En effet, lors du déplacement de la masse d'éléments sur la bande transporteuse, le broyage des mottes - qui se produit dans tous les cas, avec ou sans contre-chaîne - résulte en un dépôt de terre sur la surface des tiges. Ce phénomène de "collage" a pour effet de réduire l'espacement entre les tiges de sorte que seuls des éléments de faible taille peuvent retourner sur le sol. Ce fin tamisage n'est pas souhaité car il peut résulter en la formation d'une masse de terre compacte, sorte de ciment qui prive le sol d'une aération nécessaire.
A relever que ce problème ne peut être réglé aisément en prévoyant un espacement entre les tiges qui soit supérieur à celui de la taille des éléments qui doivent retourner sur le sol. Si l'on procédait de la sorte, des pierres de diamètre relativement élevé pourraient alors également retourner sur le sol, ce qui rendrait ce dernier inadapté à sa culture.

Finalement le brevet US 3,563,191 décrit un autre système de préparation de la terre. Ce système est utilisé pour préparer la terre en creusant celle-ci et en la projetant en arrière sur un tamis qui est légèrement incliné par rapport à la verticale. Ce tamis permet de trier la terre des pierres et de briser les mottes éventuellement présentes. Les pierres et débris qui ne traversent pas le tamis tombent directement dans la tranchée creusée tandis que la terre qui a traversé le tamis retombe ensuite sur ces pierres et les recouvre. Plus précisément, la terre et les pierres qui sont ramassés par des dents sont projetés vers l'arrière par rapport au sens de marche du système puis vers le haut par lesdites dents contre le tamis.

Comme dans les système connus cités plus haut, le système du brevet US 3,563,191 comporte également des désavantages. On peut notamment citer celui du "collage" qui peut se produire sur le tamis et ainsi en réduire la taille des trous.

### Sommaire de l'invention

Un but de la présente invention est d'améliorer les systèmes connus.

Plus particulièrement, un but de la présente invention est de proposer un système simple, facile à mettre en oeuvre et performant.

Un autre but est de proposer un système qui soit facile à transporter et à ranger.

Ces buts sont atteints par un séparateur tel que défini dans les revendications.

Le séparateur comprend les éléments suivants :
- un cadre adapté pour être tiré par un tracteur ou déplacé de façon indépendante
- des moyens de transport et de séparation liés au cadre pour le transport et la séparation des éléments
- des moyens de réception situés vers l'arrière du séparateur pour recevoir, optionnellement diriger, les éléments retenus par les moyens de transport et de séparation.

Dans le séparateur selon l'invention, les moyens de transport et de séparation qui reçoivent initialement les éléments à séparer comprennent
un premier moyen rotatif qui creuse et ramasse les éléments destinés à être traités formant une tranchée,
un deuxième moyen rotatif de transport et de séparation recevant les éléments du premier moyen rotatif,
ledit deuxième moyen coopérant avec un moyen de tri pour séparer les éléments reçus en fonction de leur taille, ledit moyen de tri étant situé de l'autre côté du deuxième moyen rotatif par rapport au premier moyen rotatif et ledit deuxième moyen transportant les éléments triés qui n'ont pas été séparés et les déposant dans la tranchée, et ledit moyen de tri permettant de déposer les éléments séparés sur les éléments non-séparés dans la tranchée.

De préférence, le premier moyen rotatif est une roto-fraise.

De préférence, le deuxième moyen rotatif est une brosse rotative.

De préférence, le moyen de tri est une plaque comprenant des trous arrangés sous forme matricielle ou un tamis ou encore un grillage, voire des barres.

Dans une variante particulièrement avantageuse, la plaque, respectivement le tamis, le grillage ou les barres, est(sont) incurvé(es) de façon à suivre au moins partiellement la courbure de la brosse rotative.

La moyen de tri peut être attaché au cadre par tout moyen de fixation approprié (vis, goupilles, soudage etc).

Ainsi, les éléments d'une taille supérieure à celle acceptée par le moyen de tri sont déposés dans le fond de la partie creusée par le premier moyen rotatif.

Ensuite, seuls les éléments qui ont passé le moyen de tri retournent sur la partie du sol située au-dessous des moyens de transport et de séparation mais au-dessus de éléments d'une taille supérieure.

Outre le fait que pour une efficacité de séparation déterminée, le séparateur selon l'invention est plus compact que ceux de l'état de la technique, il présente le mérite de réduire considérablement l'usure des moyens de transport et de séparation.

A noter enfin que l'objet de la présente invention peut être intégré à des machines de l'état de la technique. A titre d'exemple d'une telle machine, on peut citer celle qui est décrite dans la demande suisse N° 0075/99 déposée également par l'auteur de la présente invention.

Dans un deuxième mode d'exécution de l'invention, on utilise une bande de transport entre le premier moyen rotatif et le deuxième moyen rotatif.

Dans un troisième mode d'exécution de l'invention, on utilise une pré-grille entre le premier moyen rotatif et le deuxième moyen rotatif afin de procéder à un premier tri.

Un avantage du système est qu'il utilise la force centrifuge pour effectuer la séparation ce qui est beaucoup plus efficace que les solutions proposées dans l'état de la technique. Les éléments projetés possèdent une énergie cinétique propre et il n'est pas indispensable d'utiliser un autre moyen additionnel. Bien entendu, un tel moyen additionnel peut être prévu, comme dans le deuxième mode d'exécution mentionné ci-dessus.

Un autre avantage de la présente invention est que par cette utilisation de la force centrifuge, le moyen de tri (la plaque ou le grillage) est "auto-nettoyant" de par les chocs qu'il subit lors du fonctionnement mais aussi par le frottement de la brosse. On évite ainsi notamment les problèmes de collage mentionnés au début de la présente description qui sont le fait des systèmes connus.

### Brève description des figures

Trois modes de réalisation de l'invention seront décrits ci-après au moyen des figures suivantes dans lesquelles:
La figure 1 illustre un séparateur selon l'invention vu de côté selon un premier mode d'exécution.
La figure 2 représente un séparateur selon l'invention vu de côté selon un deuxième mode d'exécution.
La figure 3 représente un séparateur selon l'invention vu de côté selon un troisième mode d'exécution.
La figure 4 représente une variante du séparateur selon l'invention.

### Description détaillée de l'invention

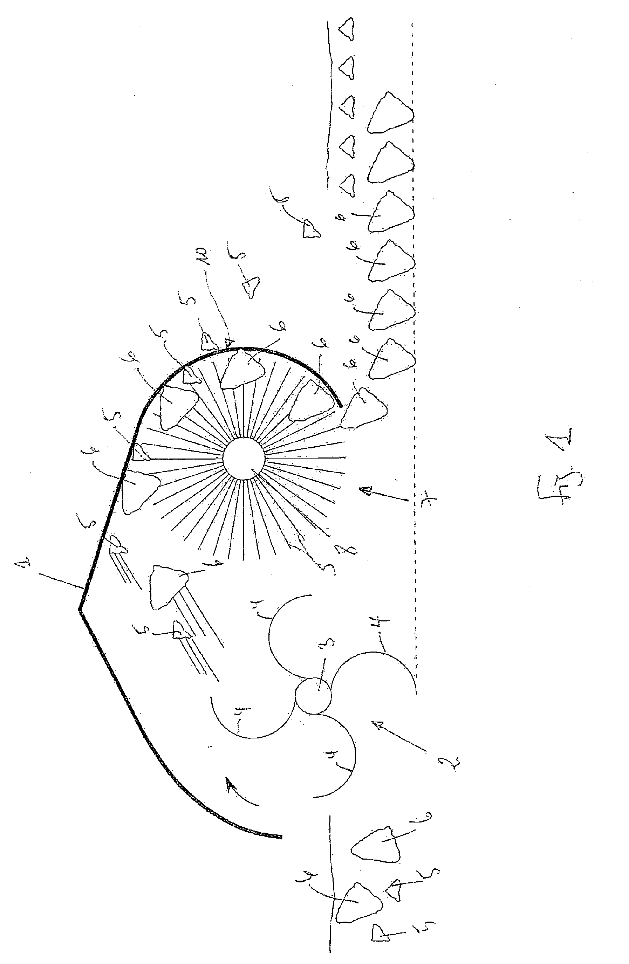

Dans la figure 1, le premier mode d'exécution du séparateur selon l'invention est représenté. Ce séparateur comprend un cadre ou châssis 1 destiné à être attaché à un véhicule par exemple du type tracteur (non représenté). Le cadre 1 porte les éléments du séparateur, notamment un premier moyen rotatif 2 qui creuse et ramasse les éléments destinés à être traités, sous forme de roto-fraise 2. Cette roto-fraise est attachée au cadre par exemple par un axe 3 et comprend des coupelles de fraisage 4 qui creusent dans la terre. L'entraînement de cette fraise s'effectue dans le sens indiqué par la flèche et au travers d'un mécanisme de cardans et d'engrenages (non représentés), connu en lui-même dans les machines agricoles actionnées par un tracteur.

La terre, les mottes et les pierres, illustrés schématiquement par les référence 5, 6 emportées dans les coupelles 4 en rotation sont projetées vers et le haut et l'arrière du cadre comme schématisé dans la figure 1. Lorsqu'elles rencontrent le cadre la terre, les mottes et les pierres 5, 6 retombent, la terre directement au sol, tandis que les mottes elles se brisent. Les pierres 5 et 6 quant à elles, elles retombent dans le deuxième moyen rotatif qui a la forme d'une brosse rotative 7. Cette brosse comprend un axe 8 sur lequel sont montés des poils 9.

Les pierres 5 et 6 sont emmenées par la rotation de la brosse 7 et se retrouvent "coincées" entre les poils 9 et une partie arrière incurvée du cadre. Cette partie est référencée de façon générale au moyen de la référence numérique 10.
A cet endroit du cadre, on a monté une plaque comportant des trous, ou par exemple un tamis ou une grille, qui permet aux pierres ne dépassant pas une certaine taille de passer un travers de cette plaque tandis que les autres pierres continuent à être déplacées par la brosse 7. Dans la figure 1, cet effet est représenté schématiquement par les pierres 5 qui se retrouvent sur la droite de la partie référencée 10. La plaque fonctionne donc comme un tamis dont la finesse permet de choisir quelle taille de pierre pourra passer au travers dudit tamis.

Les autres pierres trop grandes pour traverser la plaque (ces pierres sont identifiées par la référence 6) tombent finalement dans le fond du sillon qui est creusé par la roto-fraise 2. Par contre, les pierres 5 qui ont traversé la plaque se retrouvent finalement au-dessus des pierres 6, comme représenté dans la figure 1.

Ainsi, le système selon l'invention permet de former de couche dans lesquelles les pierres de grosse taille sont au fond, et celle de plus petite taille au-dessus, comme représenté du côté droite de la figure 1 avec la terre meuble qui aura elle aussi traversé la plaque/tamis.

Comme pour la roto-fraise 2, l'entraînement de la brosse 7 se fait de préférence au moyen du système de cardan et engrenages mentionné ci-dessus pour la roto-fraise 2 ou un moyen équivalent.

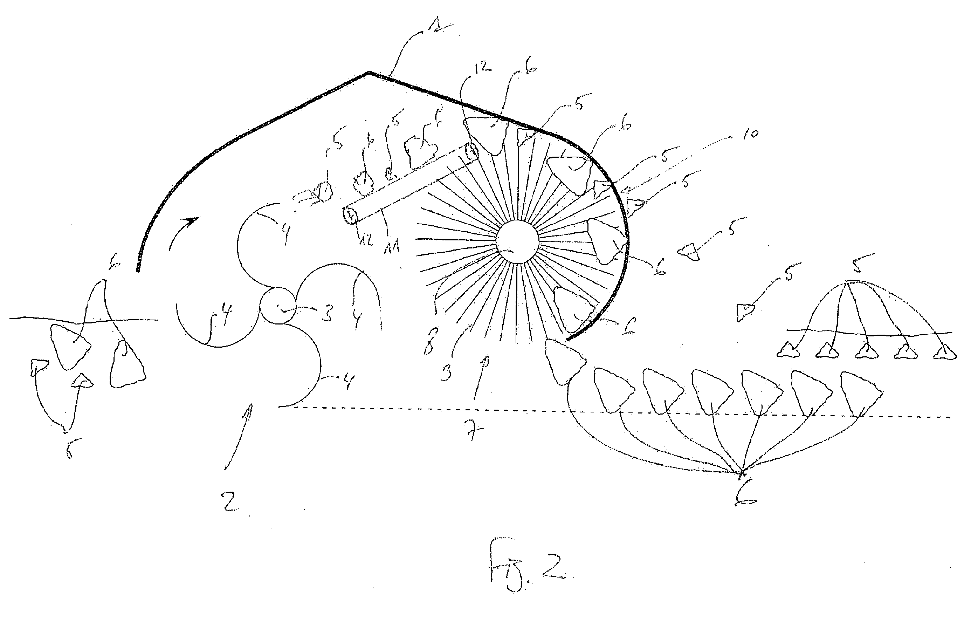

Dans la figure 2, l'on a représenté un deuxième mode d'exécution du séparateur. Dans ce mode, les éléments identiques au premier mode sont référencés au moyen des mêmes numéros et la description donnée ci-dessus s'applique de façon correspondante.

La principale différence entre ce deuxième mode et le premier mode de la figure 1 réside dans la présence d'une bande transporteuse 11 montée sur des axes 12 (dont l'un au moins est entraîné). L'intérêt de ce mode est d'assurer un transport plus "prévisible" de la terre et des pierres sur la brosse 7, celle-ci se chargeant de faciliter le tamisage des pierres délivrées par la bande 11.

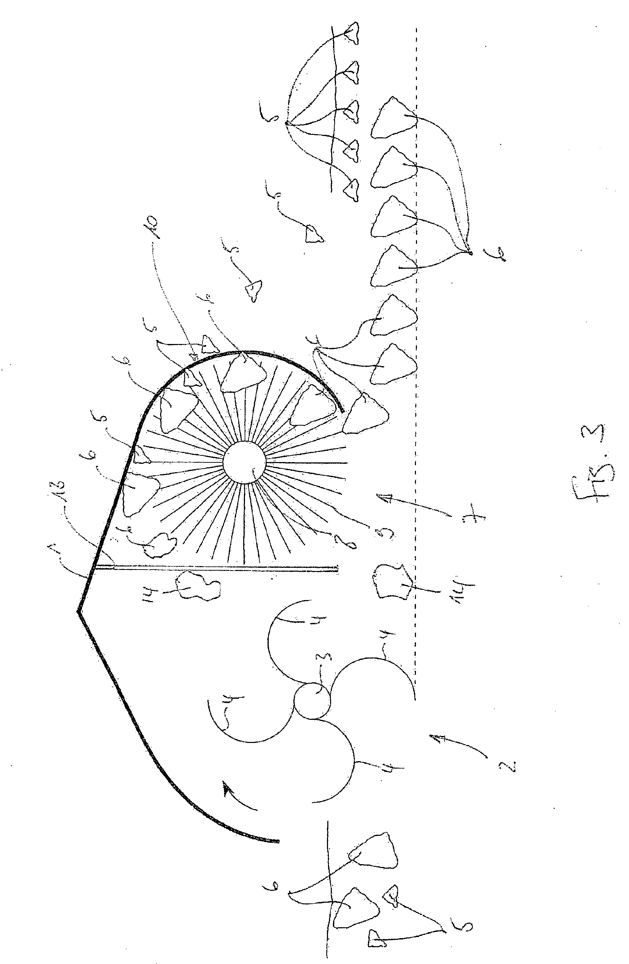

Dans la figure 3, l'on a représenté un troisième mode d'exécution du séparateur. Dans ce mode, les éléments identiques au premier mode sont référencés au moyen des mêmes numéros et la description donnée ci-dessus s'applique de façon correspondante.

La principale différence entre ce troisième mode et le premier mode de la figure 1 réside dans la présence d'une pré-grille 13 montée entre la roto-fraise 2 et la brosse7. L'intérêt de ce mode est de permettre un premier tamisage plus grossier de la terre et de pierres ramassés avant leur réception par la brosse 7. Ainsi, les pierres 14 qui sont de plus grosse taille que les pierres 6 ne passent pas ce premier tamis et tombent dans la tranchée en premier, comme représenté au bas de la pré-grille 13. Ce mode d'exécution permet ainsi un tamisage plus fin en ce sens que le tamis 10 peut être plus fin que dans les deux premiers modes d'exécution décrits.

La pré-grille 13 peut être montée par tout moyen approprié, par exemple soudage, vissage etc. De préférence, on utilise un cadre de support qui permet un meilleur maintien de la pré-grille.

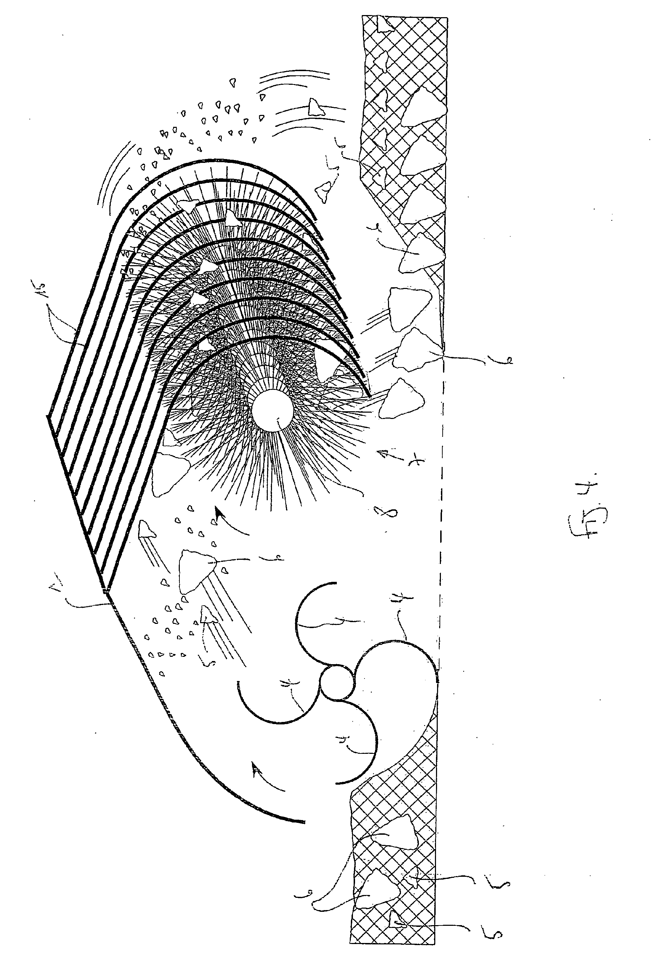

Dans la figure 4, on a représenté en perspective une variante du séparateur. Dans cette variante, les mêmes éléments sont références comme dans les figures précédentes. Plus précisément, on a représenté dans cette figure des barres 15 recourbées de façon suivre approximativement la courbure de la brosse 7 et qui forment le moyen de tri. Elles peuvent être des barres individuelles de section circulaire (afin d'être suffisamment rigides) montées parallèlement les unes aux autres sur le cadre 1.

Dans une autre variante, ces barres peuvent être découpées dans une plaque, par exemple en métal, qui serait recourbée. Dans ce cas, on aurait une configuration avec des fentes qui peuvent être plus ou moins allongées dans la plaque.

La variante de la figure 4 peut s'appliquer à tous les modes d'exécution décrits.

Bien entendu, les modes d'exécution donnés le sont à titre d'exemple illustratifs non-limitatifs et des variations sont possibles, notamment en faisant appel à des moyens équivalents.

### Références numériques

- 1: cadre, châssis
- 2: roto-fra ise
- 3: axe roto-fraise
- 4: coupelles de roto-fraise
- 5: pierres (petites)
- 6: pierres (grosses)
- 7: deuxième moyen rotatif (brosse)
- 8: axe de la brosse
- 9: poils de la brosse
- 10: plaque percée, tamis, grille
- 11: bande transporteuse
- 12: axes de bande 11
- 13: pré-grille pour le pré-tamisage
- 14: pierres de plus grosse taille (que les pierres 6)
- 15: barres

## Revendications

1. Séparateur pour machine agricole comprenant les éléments suivants :
- un cadre (1) adapté pour être tiré par un tracteur ou déplacé de façon indépendante
- des moyens de transport et de séparation liés au cadre pour le transport et la séparation des éléments
- des moyens de réception situés vers l'arrière du séparateur pour recevoir, optionnellement diriger, les éléments retenus par les moyens de transport et de séparation, le séparateur étant **caractérisé par le fait que**:
- les moyens de transport et de séparation qui reçoivent initialement les éléments à séparer comprennent
un premier moyen rotatif (2) qui creuse et ramasse les éléments (5,6) destinés à être séparés
un deuxième moyen rotatif de transport et de séparation (7) recevant les éléments (5,6) du premier moyen rotatif
ledit deuxième moyen coopérant avec un moyen de tri (10) pour séparer les éléments (5,6) reçus en fonction de leur taille, ledit moyen de tri (10) étant situé de l'autre côté du deuxième moyen rotatif (7) par rapport au premier moyen rotatif (2) et ledit deuxième moyen (7) transportant les éléments triés (6) qui n'ont pas été séparés et les déposant dans la tranchée, et ledit moyen de tri (10) permettant de déposer les éléments séparés (5) sur les éléments non-séparés (6) dans la tranchée.

2. Séparateur selon la revendication 1, dans lequel le premier moyen rotatif (2) est une roto-fraise.

3. Séparateur selon la revendication 1 ou 2, dans lequel le deuxième moyen rotatif (7) est une brosse rotative.

4. Séparateur selon la revendication 1, 2 ou 3, dans lequel le moyen de tri est une plaque (10) comprenant des trous arrangés sous forme matricielle, ou des fentes ou un grillage.

5. Séparateur selon l'une des revendications 1 à 3, dans lequel le moyen de tri est formé de barres (15) parallèles.

6. Séparateur selon les revendications 3, 4 ou 5, dans lequel la plaque, ou le grillage ou les barres, est(sont) incurvé(es) de façon à suivre partiellement la courbure de la brosse rotative (7).

7. Séparateur selon l'une des revendications précédentes, comprenant une bande (11) située entre le premier moyen rotatif (2) et le deuxième moyen rotatif (7).

8. Séparateur selon l'une des revendications 1 à 6, comprenant une pré-grille (13) de tri située entre le premier moyen rotatif (2) et le deuxième moyen rotatif (7).

9. Machine agricole comprenant un séparateur selon l'une des revendications précédentes.

## Claims

1. A separator for an agricultural machine comprising the following elements:
- a frame (1) designed to be pulled by a tractor or moved independently
- transport and separation means linked to the frame to transport and separate elements
- reception means situated behind the separator to receive, optionally direct, the elements held by the transport and separation means, the separator being **characterized in that**:
- the transport and separation means that initially receive the elements to be separated comprise
a first rotary means (2) which digs up and collects the elements (5, 6) intended to be separated
a second rotary transport and separation means (7) receiving the elements (5, 6) from the first rotary means
said second means cooperating with a sorting means (10) for separating the received elements (5, 6) according to their size, said sorting means (10) being located on the other side of the second rotary means (7) in relation to the first rotary means (2) and said second means (7) transporting the sorted elements (6) that have not been separated and depositing them in the trench, and said sorting means (10) making it possible to deposit the separated elements (5) on the non-separated elements (6) in the trench.

2. The separator as claimed in claim 1, in which the first rotary means (2) is a rotary cultivator.

3. The separator as claimed in claim 1 or 2, in which the second rotary means (7) is a rotary brush.

4. The separator as claimed in claim 1, 2 or 3, in which the sorting means is a plate (10) including holes arranged in the form of a matrix, or slots or a wire mesh.

5. The separator as claimed in one of claims 1 to 3, in which the sorting means is formed by parallel bars (15).

6. The separator as claimed in claims 3, 4 or 5, in which the plate, or the wire mesh or the bars, is (are) incurved so as to partially follow the curvature of the rotary brush (7).

7. The separator as claimed in one of the preceding claims, comprising a belt (11) situated between the first rotary means (2) and the second rotary means (7).

8. The separator as claimed in one of claims 1 to 6, comprising a sorting pre-mesh (13) situated between the first rotary means (2) and the second rotary means (7).

9. An agricultural machine comprising a separator as claimed in one of the preceding claims.

## Patentansprüche

1. Separator für eine Landmaschine, der die folgenden Elemente umfasst:
- einen Rahmen (1), der so ausgelegt ist, dass er von einem Traktor gezogen oder in unabhängiger Weise verlagert wird,
- Transport- und Trennmittel, die mit dem Rahmen verbunden sind, für den Transport und die Trennung der Elemente
- Aufnahmemittel, die hinter dem Separator liegen, um die von den Transport- und Trennmitteln gehaltenen Elemente aufzunehmen und wahlweise zu lenken, wobei der Separator **dadurch gekennzeichnet ist, dass**:
- die Transport- und Trennmittel, die anfänglich die zu trennenden Elemente aufnehmen, Folgendes umfassen:
ein erstes Drehmittel (2), das die Elemente (5, 6), die getrennt werden sollen, ausgräbt und aufliest,
ein zweites Drehmittel (7) zum Transport und zur Trennung, das die Elemente (5, 6) vom ersten Drehmittel empfängt,
wobei das zweite Mittel mit einem Auslesemittel (10) zum Trennen der empfangenen Elemente (5, 6) in Abhängigkeit von ihrer Größe zusammenarbeitet, wobei das Auslesemittel (10) auf der anderen Seite des zweiten Drehmittels (7) in Bezug auf das erste Drehmittel (2) liegt und das zweite Mittel (7) die ausgelesenen Elemente (6), die nicht abgetrennt wurden, transportiert und sie im Graben ablegt, und das Auslesemittel (10) es ermöglicht, die abgetrennten Elemente (5) auf den nicht abgetrennten Elementen (6) im Graben abzulegen.

2. Separator nach Anspruch 1, wobei das erste Drehmittel (2) eine Rotationsfräse ist.

3. Separator nach Anspruch 1 oder 2, wobei das zweite Drehmittel (7) eine Drehbürste ist.

4. Separator nach Anspruch 1, 2 oder 3, wobei das Auslesemittel eine Platte (10) mit Löchern, die in Matrixform angeordnet sind, oder Schlitzen oder ein Gitter ist.

5. Separator nach einem der Ansprüche 1 bis 3, wobei das Auslesemittel aus parallelen Stangen (15) gebildet ist.

6. Separator nach den Ansprüchen 3, 4 oder 5, wobei die Platte oder das Gitter oder die Stangen gekrümmt ist (sind), so dass es (sie) teilweise der Krümmung der Drehbürste (7) folgt (folgen).

7. Separator nach einem der vorangehenden Ansprüche mit einem Band (11), das zwischen dem ersten Drehmittel (2) und dem zweiten Drehmittel (7) liegt.

8. Separator nach einem der Ansprüche 1 bis 6 mit einem Auslesevorgitter (13), das zwischen dem ersten Drehmittel (2) und dem zweiten Drehmittel (7) liegt.

9. Landmaschine mit einem Separator nach einem der vorangehenden Ansprüche.
